# NEUE EUROPÄISCHE PATENTSCHRIFT

(11) **EP 0 981 457 B2**
(45) Veröffentlichungstag und Bekanntmachung des Hinweises auf die Entscheidung über den Einspruch: **03.05.2006**
(45) Hinweis auf die Patenterteilung: 02.05.2003
(21) Anmeldenummer: 98959778.6
(22) Anmeldetag: 30.10.1998
(51) Int. Cl.: B60J 7/057, G01D 5/14

(54) **ANTRIEBSVORRICHTUNG FÜR EIN ZWISCHEN ENDSTELLUNGEN BEWEGBARES TEIL EINES FAHRZEUGS UND VERFAHREN ZU IHRER HERSTELLUNG**
DRIVE DEVICE FOR A MOVABLE PART THAT CAN BE DISPLACED BETWEEN END POSITIONS IN A VEHICLE AND METHOD FOR THE PRODUCTION THEREOF
DISPOSITIF D'ENTRAINEMENT POUR UN ELEMENT, POUVANT SE DEPLACER ENTRE DES POSITIONS FINALES, D'UN VEHICULE ET SON PROCEDE DE PRODUCTION

(30) Priorität: 10.12.1997 DE 19754843
(43) Veröffentlichungstag der Anmeldung: 01.03.2000
(73) Patentinhaber: ROBERT BOSCH GMBH, 70442 Stuttgart (DE)
(72) Erfinder: BERNAUER, Christof, D-76596 Forbach (DE); BRAUN, Peter, D-77830 Bühlertal (DE); BAUMANN, Rolf, D-77815 Bühl (DE)
(86) Internationale Anmeldenummer: PCT/DE1998/003175
(87) Internationale Veröffentlichungsnummer: WO 1999/029528

(56) Entgegenhaltungen:
- EP-A- 0 469 286
- EP-A- 0 692 400
- WO-A-82/02803
- WO-A-97/43602
- DE-A- 3 829 405
- DE-A- 4 005 987
- US-A- 5 528 139
- Physik für Ingenieure, 1992, VDI-Verlag S.301-307

## Beschreibung

### Stand der Technik

Die Erfindung geht aus von einem Verfahren nach der Gattung des Anspruches 1 oder 2.

Durch die Druckschrift DE 10 24 373 C3 ist bereits eine Antriebsvorrichtung für ein zwischen Endstellungen bewegbares Teil wie Schiebedach eines Fahrzeugs bekannt. Diese Antriebsvorrichtung besitzt einen Elektromotor, ein dem Elektromotor nachgeordnetes Untersetzungsgetriebe, eine an das Untersetzungsgetriebe angekoppelte Seilrolle zum Bewegen eines zu dem Schiebedach führenden Seiles und eine Schalteinrichtung, die mittels eines Zahnradpaares in Antriebsverbindung mit der Seiltrommel steht und eine Schnekkenwelle, ein mit dieser kämmendes Schneckenrad, das einen Schaltfinger trägt und dieserart ein Schaltrad bildet, und einen ersten Kontakt und einen zweiten Kontakt aufweist, die von dem Schaltfinger betätigbar sind. Die vom Schaltfinger betätigbaren Schaltkontakte dienen zum Stillsitzen des Elektromotors dann, wenn das Schiebedach in seine konstruktiv festgelegten Endpositionen gelangt. Dabei sind die beiden Zahnräder, die Schnecke und das Schneckenrad so ausgebildet, daß eine Verschiebung des Schiebedaches zwischen den konstruktiv festgelegten Endlagen im wesentlichen ein Drittel einer Umdrehung des Schneckenrades zur Folge hat. Einer der Endschalter ist in der Schalteinrichtung fest montiert angeordnet, wogegen der andere Endlagenschalter passend zum Verschiebeweg des Schiebedaches justierbar ist. Dieserart kann die Antriebsvorrichtung nach ihrer Herstellung justiert und in justiertem Zustand in ein Fahrzeug eingebaut werden.

Durch die Druckschrift US 44,68,063 A ist eine weitere Antriebsvorrichtung für ein Schiebedach bekannt. Diese enthält einen Elektromotor, ein Schnekkengetriebe, eine Sicherheitskupplung am Schneckengetriebe, eine Getriebewelle und von der Getriebewelle antreibbar eine erste Getriebeanordnung zum Antreiben eines Ritzels, in das Antriebsdrähte des Schiebedaches eingreifen, und eine zweite Getriebeanordnung zum Antreiben einer Schalteinrichtung. Die zweite Getriebeanordnung ist hier als ein sogenanntes Exzenterzahnrädergetriebe ausgebildet und trägt ein Schaltrad mit Nocken. Dabei sind die erste Getriebeanordnung und die zweite Getriebeanordnung derart gestaltet, daß bei einer Verschiebung des Schiebedaches zwischen seinen beiden Endlagen das Schaltrad weniger als eine Umdrehung ausführt. Das Schaltrad weist in axialen Abständen zwei Nocken auf, denen je ein Mikroschalter zugeordnet ist. In der Druckschrift ist angegeben, daß die Antriebsvorrichtung vormontiert und exakt justiert werden kann vor dem Einsetzen in ein Fahrzeug.

Durch die Druckschrift EP 0 469 286 B1 ist eine weitere Antriebsvorrichtung bekannt, deren Schaltrad beispielsweise zwei Nocken und diesen zugeordnet zwei Schalter aufweisen kann. Alternativ gibt die Druckschrift auch an, daß anstelle von Nocken Permanentmagnete an dem Schaltrad befestigt sein können und daß diesen Permanentmagneten dann magnetfeldempfindliche Sensoren wie Hall-Sensoren zugeordnet werden.

Es gibt noch Antriebsvorrichtungen mit Elektromotoren, Schneckengetrieben und Steuereinrichtungen zum Bewegen von Scheibenwischern zwischen zwei Endstellungen. Dabei sind dann Schalträder zum Betätigen von Kontakten und auch Kurbeln, die über Gelenkstangen an Wischerarmen angreifen, starr mit den Wellen von Schneckenrädern verbunden. Durch die Druckschrift US 48 66 357 A ist es bei einer Antriebsvorrichtung für einen Scheibenwischer bekannt, anstelle von mechanisch betätigten Kontakten berührungslos arbeitende optische Sensoren zu verwenden zu dem Zweck, in Abhängigkeitvon der ausgewählten Größe eines Wischfeldes einen Elektromotor abwechselnd in zwei Drehrichtungen umzuschalten und zwischen den Umschaltungen die Wischgeschwindigkeit nach einem vorgewählten Zeitplan zu variieren. In Abhängigkeit von einem jeweiligen Schwenkwinkel eines Wischerarmes erhalten die optischen Sensoren Hellsignale, die von einer Codescheibe gesteuert werden. Eine solche Codescheibe ist hier mit einem Gray-Code ausgestattet, benötigt also mehrere Codespuren und setzt eine relativ komplizierte Auswerteschaltung, die an die optischen Sensoren angeschlossen ist, voraus sowie eine Regelschaltung, die Auswertungsergebnisse mit aus einem Programmspeicher auslesbaren Sollwerten vergleicht und in Abhängigkeit vom Vergleichsergebnis die Drehzahl des Elektromotors steuert. Eine durch die Druckschrift EP 0 531 793 A1 bekannte weitere Antriebsvorrichtung mit einem in zwei Drehrichtungen betreibbaren sogenannten Ultraschallmotor besitzt ebenfalls eine synchron mit einem Wischerarm verdrehbare Codescheibe, die Hell-Dunkel-Markierungen aufweist. Hierbei sind die Hell-Dunkel-Markierungen so angeordnet, dass sie direkt in Verbindung mit einem optischen Sensor Schwenkpositionen des Scheibenwischerarmes angeben.

Die Druckschrift US 5,528,139 beschreibt einen Elektromotor, zu dessen Positionserfassung ein röhrenförmiger Magnet auf einer Ankerwelle angeordnet ist. Bei einer Ausführung gemäß Fig. 4 wechselwirkt ein Sensor mit einer Fläche des Magneten, die senkrecht zu dessen Drehrichtung ausgerichtet ist. Die magnetische Wirkung des röhrenförmigen Magneten ist im Wesentlichen konstruktiv durch dessen bauliche Form bestimmt.

Mit der EP 0 692 400 A1 ist ein elektrischer Positionierantrieb bekannt geworden, bei dem radial aufeinanderfolgend verschiedene Spuren für eine Winkelerkennung angeordnet sind. Hierbei sind Dauermagneten derart in mechanischen Nuten des Schaltrads angeordnet, dass diese in den radialen Innenflächen mit Sensorelementen wechselwirken. Die Bahnen und Winkeleinstellungen sind dabei baulich fest vorgegeben.

Die WO 97/43602 A zeigt eine Vorrichtung zum Erfassen rotatorischerBewegungen, bei derdie radialen Außenflächen eines Magnetrings über Polschuhe mit einem Detektor wechselwirken. Dabei sind die magnetischen Bereiche ebenfalls baulich fest vorgegeben.

Erkennbar ist, daß solche Steuereinrichtungen, gleichgültig ob ihre Schalträder synchron mit Ausgangswellen von Antriebsvorrichtungen gedreht werden oder aber mittelbar über Untersetzungsgetriebe mit festgelegten Übersetzungsverhältnissen von diesen Ausgangswellen mechanisch angetrieben werden, fallweise mechanisch anzupassen sind für jeweils durch einen Fahrzeugtyp vorgegebene Wege oder Winkel zwischen Endstellungen der bewegbaren Teile und gegebenenfalls noch wenigstens einer Zwischenstellung. Demzufolge kann es nötig sein, für unterschiedliche Fahrzeugtypen unterschiedliche Steuemocken bzw. unterschiedliche Code-Scheiben auf Vorrat zu halten oder die Ausrichtung von Sensoren perteures Justieren anzupassen.

### Vorteile der Erfindung

Das erfindungsgemäße Verfahren mit den Merkmalen des Anspruchs 1 bzw. 2 hat den Vorteil, daß das Schaltrad als ein neutrales Bauteil aus magnetisierbarem Werkstoff auf Vorrat legbar ist und erst kurz vor dem Einbau in die jeweilige individuelle Antriebsvorrichtung oder aber nach dem Einbau in diese Antriebsvorrichtung fertigstellbar ist durch Magnetisieren mit einem Magnetisierungsmuster, das dem betreffenden Anwendungsfall entspricht. Dabei werden die Schalträder je nach Anwendungsfall auf einer oder mehreren konzentrischen Ringzonen wenigstens eine Nord-Süd-Polfolge haben. Da sich zugeordnete magnetfeldempfindliche Sensoren wie Hall-Sensoren ohne weiteres nach einem vorbestimmten Muster und dabei mit großer Wiederholgenauigkeit an einer Halteeinrichtung wie Leiterplatte befestigen lassen, ist ein zeitraubendes Justieren der Steuereinrichtungen vermieden. Es genügt beispielsweise, wenn vor dem Aufsetzen eines Deckels das jeweilige Schaltrad auf exakte Magnetisierung von Nordpolen und Südpolen geprüft wird. Erkennbar verringert die Erfindung Lagerhaltungskosten und beschleunigt die Fertigstellung von Antriebsvorrichtungen.

Die Merkmale des Verfahrensanspruchs 2 ergeben den Vorteil, daß das Magnetisieren beispielsweise an einer Montagestraße für solche Antriebsvorrichtungen durchführbar ist, so daß vor Inbetriebnahme einer dafür notwendigen Magnetisiervorrichtung lediglich auf das Einsetzen der richtigen Magnetisierungsspule bzw. Magnetisierungswerkzeugs zu achten ist. Die Magnetisierung an der Montagestraße vermeidet also Verwechselungen und vereinfacht die Lagerhaltung.

Durch die in den abhängigen Ansprüchen angegebenen Merkmale sind vorteilhafte Ausgestaltungen und Verbesserungen des Anmeldungsgegenstandes möglich.

### Zeichnung

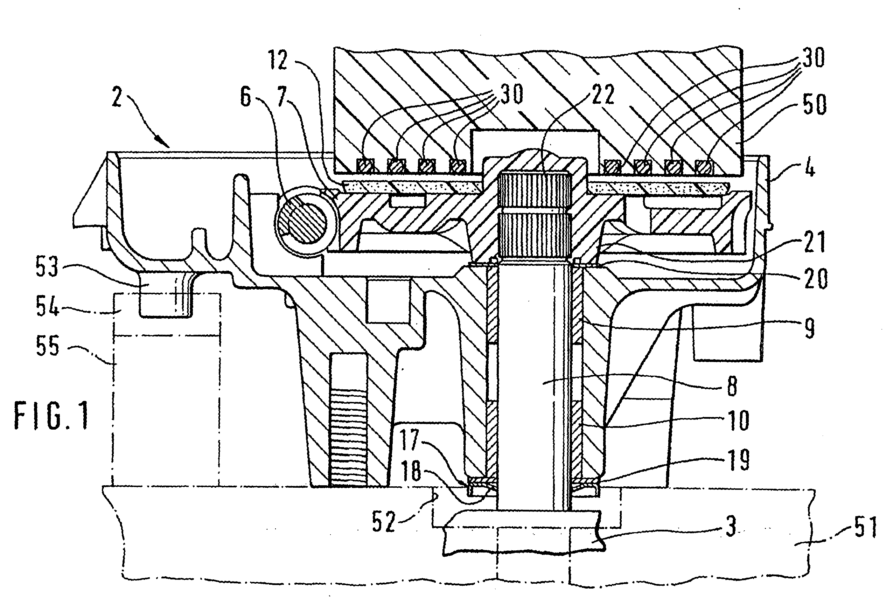

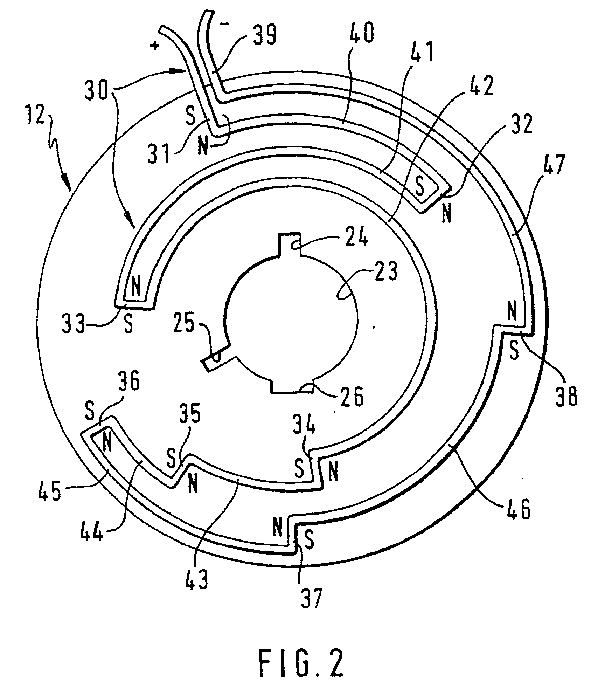

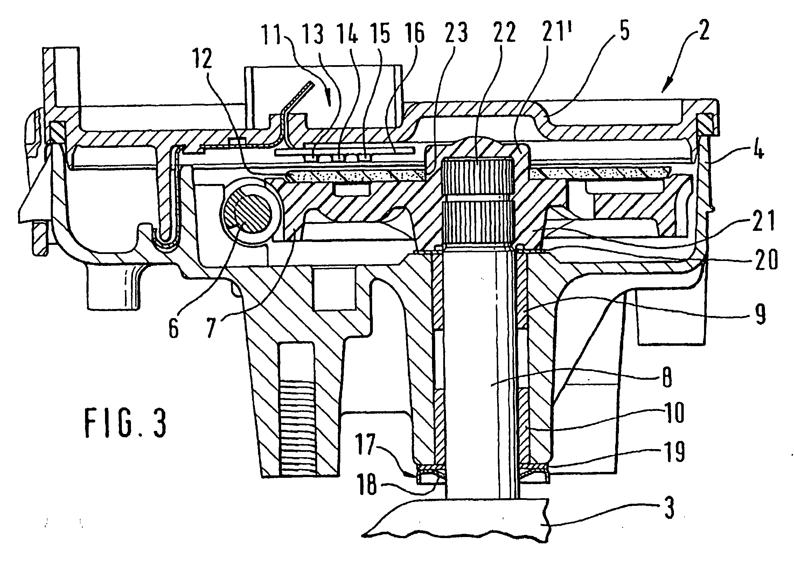

Figur 1 zeigt einen Schnitt durch eine teilweise fertiggestellte Antriebsvorrichtung, Figur 2 ein Einzelteil der Antriebsvorrichtung und Figur 3 die Antriebsvorrichtung in zusammengebautem Zustand.

### Beschreibung des Ausführungsbeispiels

Im Ausführungsbeispiel ist die Antriebsvorrichtung 2 ausgebildet als eine Antriebsvorrichtung für einen Scheibenwischer, zu dessen Antrieb die Antriebsvorrichtung 2 eine teilweise dargestellte Kurbel 3 eines nicht dargestellten Kurbelgetriebes, das zu einem Wischerarm führt, in Drehung versetzt.

Die Antriebsvorrichtung 2 hat ein Gehäuse 4 und gemäß der Figur 3 einen Gehäusedeckel 5, einen nicht gezeichneten Elektromotor zum Antreiben einer Schneckenwelle 6, ein mit der Schneckenwelle 6 kämmendes Schneckenrad 7, eine mit dem Schneckenrad 7 verdrehfest verbundene Schneckenradwelle 8, im Gehäuse 4 befindliche Lagerbuchsen 9 und 10 für die Schneckenradwelle 8 und eine Steuereinrichtung 11, die im Beispiel ein mit dem Schneckenrad 7 verdrehfest verbundenes Schaltrad 12 und stirnseitig des Schaltrades 12 und dabei abgekehrt vom Schneckenrad 7 entfernt hier drei magnetflußempfindliche Sensoren 13, 14, 15 auf einer Sensorbrücke 16 aufweist.

Die Sensorbrücke 16 ist beispielsweise gestaltet als eine Leiterbahnplatte, die am Gehäusedeckel 5 befestigt sein kann. Die Sensoren 13, 14 und 15 weisen hier nicht dargestellte Lötfahnen auf, mittels denen die Sensoren 13 bis 15 an der Sensorbrücke 16 angelötet sein können. Die Sensoren 13 bis 15 sind beispielsweise als Hall-Sensoren ausgebildet und haben von der Schaltscheibe 12 einen Mindestabstand. Damit dieser Mindestabstand erhalten bleibt, ist außerhalb des Gehäuses 4 ein federnder Axialsicherungsring 17 um die Schneckenradwelle 8 herum angeordnet. Der Axialsicherungsring 17 weist federnde Krallen 18 auf, die ein Herauswandern der Schneckenradwelle 8 aus dem Axialsicherungsring 17 und dabei eine Annäherung des Schneckenrades 7 an die Sensoren 13 bis 15 vermeiden. Zwischen den Axialsicherungsring 17 und das Gehäuse 4 ist hier eine Anlaufscheibe 19 eingebaut, die beispielsweise aus Federstahlblech besteht und verschleißmindemd wirkt, so daß ein konstruktiv gewollter Abstand zwischen dem Schneckenrad 7 bzw. der Schaltscheibe 12 und den Sensoren 13 bis 15 ausreichend sicher erhalten bleibt. Eine solche verschleißmindernde Maßnahme ist auch vorgenommen durch Einsetzen einer zweiten Anlaufscheibe 20 zwischen einer Nabe 21 des Schneckenrades 7 und dem Gehäuse 4. Das Schneckenrad 7 und seine Nabe 21 sind hier aus thermoplastischem Kunststoff gespritzt, wodurch eine verdrehfeste Verbindung mit der Schneckenwelle 8 herstellbar ist durch Anordnung einer Rändelung 22 oder einer alternativen Kordelung, in die zur Bildung einer formschlüssigen Verbindung der thermoplastische Kunststoff eindringt. Insoweit sind für den zuständigen Fachmann die mechanischen Bauteile der Antriebsvorrichtung 2 ausreichend beschrieben.

In den Figuren 1 und 3 ist das Schaltrad 12 längsgeschnitten dargestellt, wobei ersichtlich ist, daß ein Teil 21' der Nabe 21 als ein Zentrierzapfen dient, der in eine Öffnung 23 des Schaltrades 12 hineinragt. Eine Draufsicht auf das Schaltrad 12 mit seiner Öffnung 23 ist in der Figur 2 dargestellt. Beispielsweise ist der Umfang der Öffnung 23 unterbrochen von drei ungleich ausgebildeten Nuten 24, 25 und 26. In nicht dargestellter Weise kann das Teil 21' den Querschnitten der Nuten 24, 25 und 26 angepaßte Vorsprünge aufweisen, so daß diese Vorsprünge zusammen mit den Nuten 24, 25 und 26 eine Vielkeilverbindung bilden, die beim Überschieben der Schaltscheibe 12 über das Teil 21' eine drehwinkelkorrekte und auch seitenkorrekte Ausrichtung der Schaltscheibe 12 zum Schneckenrad 7 und damit später zur Kurbel 3 erzwingt insofern, als bei einer anderen Ausrichtung das Schaltrad 12 nicht über das Teil 21' steckbar ist. Die drei Nuten 24, 25 und 26 bewirken also eine Codierung, wie sie beispielsweise prinzipiell bei elektrischen Steckverbindern bekannt ist zur Vermeidung von Fehlverschaltungen und Kurzschlüssen.

Wie aus den Figuren 1 und 3, die einen radialen Schnitt durch das Schaltrad 12 zeigen, erkennbar ist, ist das Schaltrad nach Art einer Ringscheibe, also im wesentlichen dünn ausgebildet. Diese Ringscheibe ist beispielsweise hergestellt aus Permanentmagnetpulver und einer thermoplastischen Bindung. Damit diese Ringscheibe 12 die ihr zugedachte Aufgabe der Signalerzeugung in wenigstens einem der Sensoren 13 bis 15 erfüllen kann, ist sie zu magnetisieren, wobei das Magnetisieren in Abhängigkeit der durch einen Fahrzeugtyp vorgegebenen Verstellwegmaße erfolgt. Je Fahrzeugtyp oder gar je Karosserietyp wird deshalb die Magnetisierung nach einem angepaßten Muster erfolgen. Ein Beispiel für ein solches Muster ist dargestellt in der Figur 2 durch Anordnen einer Magnetisierungsspule 30, also eines Magnetisierungswerkzeugs, über dem Grundriß der Ringscheibe 12. Ausgehend von einem Plus-Anschluß hat die Magnetisierungsspule 30 aufeinanderfolgend radiale Drahtabschnitte 31 bis 39 und dazwischen konzentrische, also bogenförmige Drahtabschnitte 40 bis 47. Wenn Magnetisierungsstrom durch die Magnetisierungsspule 30 geleitet wird, so fließt dieser Magnetisierungsstrom in dem radialen Drahtabschnitt 31 radial einwärts, also in Richtung der Mittenachse der Ringscheibe 12. Dadurch ergibt sich nach der "Rechtsschraube-Regel" bei 31 die dort mit N und S bezeichnete Polanordnung und bei 32, 33, 34, 35, 36, 37 und 38 ergeben sich die jeweils dort angegebenen Polanordnungen. Die Spule 30 kann in einem Spulenhalter 50 fixiert sein. Ein solcher Spulenhalter 50 ist schematisiert in der Figur 1 dargestellt.

Ausgehend von der Figur 2 ist die Möglichkeit erkennbar, das Schaltrad 12 nach einem vorgegebenen Musterzu magnetisieren, ohne daß dabei das Schaltrad 12 mit der Antriebsvorrichtung 2 vereinigt ist. Von dieser Möglichkeit wird beispielsweise Gebrauch gemacht, wenn ein unmagnetisierter Rohling eines solchen Schaltrades von einem Vorratsspeicher bei der Montagestraße entnommen und auf dem Weg zu einer Montagestation dieser Montagestraße magnetisiert wird. Für diesen Fall bildet die durch die Anordnung der Nuten 24, 25 und 26 erstellte Codierung die Gewähr dafür, daß das Schaltrad 12 nur in der vorgeplanten Ausrichtung entlang dem Teil 21' auf das Schneckenrad 7 absenkbar ist. Dort wird es dann beispielsweise mittels Klebstoff festgehalten.

Die Alternative dazu ist in der Figur 1 dargestellt anhand der mittels eines Spulenhalters 50 oberhalb der Schaltscheibe 12 ausgerichteten Magnetisierungsspule 30. Damit hierbei eine vorgebbare Drehausrichtung des Magnetisierungsmusters relativ zu dem Schaltrad 12 und dabei auch der Antriebsvorrichtung 2 zustandekommt, ist das Gehäuse 4 der Antriebsvorrichtung 2 in eine Aufnahmevorrichtung 51 eingesetzt. Die Aufnahmevorrichtung 51 weist zur Aufnahme eines aus der Antriebsvorrichtung 2 herausragenden Abschnittes der Schneckenwelle 8 eine Aufnahmebohrung 52 auf und für die richtige Drehausrichtung um die Aufnahmebohrung 52 besitzt das Gehäuse 4 einen Ausrichtzapfen 53, der in eine Ausrichtnut 54 eintaucht, die sich oben und dabei stimseitig in einer zur Aufnahmevorrichtung 51 gehörenden Säule 55 befindet.

Unter Verwendung dieser Aufnahmevorrichtung 51 und des dazu geeignet ausgerichteten Spulenhalters 50 und dabei auch der Spule 30 erfolgt die Magnetisierung unter gleichzeitiger richtiger Ausrichtung des Magnetisierungsmusters, so daß beim Beenden des Magnetisierens die Antriebsvorrichtung 2 fertig justiert ist bezüglich des Schaltrades 12. Wenn dann der in der Figur 3 dargestellte Gehäusedeckel 5 mit der daran befestigten Sensorbrücke 16 auf das Gehäuse 4 aufgesetzt ist, ist die Antriebsvorrichtung 2 komplett montiert. Weil es technisch keine Schwierigkeit macht, die Sensorbrücke 16 in vorbestimmter Weise an dem Gehäusedeckel 5 zu befestigen, ist also nach dem Befestigen des Gehäusedeckels 5 die Antriebsvorrichtung 2 fertig und kann danach zu einem Fahrzeug zwecks eines Einbauens verbracht werden.

Wie bereits erwähnt, ist die Erfindung beschrieben im Zusammenhang mit einer Antriebsvorrichtung 2, die für einen Scheibenwischer bestimmt ist und deshalb relativ einfach im Aufbau ist. Die Erfindung ist aber auch anwendbar bei einer solchen Antriebsvorrichtung, die zur Gattung der Schiebedachantriebsvorrichtungen gehört. Diese Gattung ist in der Beschreibungseinleitung ausgiebig erwähnt, so daß es hier keiner weiteren Erläuterung anhand einer Zeichnung bedarf. Im Fall der Anwendung der Erfindung bei einer Schiebedachantriebsvorrichtung kommt es nicht darauf an, in welcher Weise Antriebsmomente übertragende Getriebeelemente ausgebildet sind. Auch kommt es nicht darauf an, welcher Typ von Getriebe zum Drehen des Schaltrades 12 in Abhängigkeit der Länge eines von einem Schiebedach zurückgelegten Weges verwendet wird.

Die Anwendung der Erfindung ist aber nicht auf das Antreiben von Scheibenwischern oder Schiebedächern beschränkt. Vielmehr kann die Erfindung auch Verwendung finden bei Fensterhebern, Lüftungsklappen, Schiebetüren, Fahrzeugsitzen und Lenkradanordnungen.

## Patentansprüche

1. Verfahren zum Herstellen einer Antriebsvorrichtung (2) für ein zwischen Endstellungen bewegbares Teil eines Fahrzeugs mit einem Elektromotor, mit einer ein Drehmoment aus der Antriebsvorrichtung (2) herausführenden Welle (8), mit einer der Steuerung sowie Stillsetzen des Elektromotors für mindestens eine vorbestimmte Stellung des bewegbaren Teils dienenden Schalteinrichtung, die ein Schaltrad (12) mit mindestens einem Dauermagnet und mindestens einen magnetfeldempfindlichen Sensor (13, 14,15) aufweist, wobei das Schaltrad (12) wenigstens mittelbar mit der Welle (8) verkoppelt ist, so daß es beim Bewegen des Teils des Fahrzeugs zwischen zwei Endstellungen höchstens um 360° drehbar ist, wobei das Schaltrad (12) scheibenförmig ausgebildet ist und wenigstens teilweise aus magnetisierbarem Werkstoff besteht, wobei wenigstens ein magnetflußempfindlicher Sensor (13, 14, 15) mit einer Fläche des Schaltrads (12) wechselwirkt, die senkrecht zu einer Drehachse des Schaltrads (12) ausgerichtet ist, wobei wenigstens eine Ringzone der Fläche in wenigstens einem Bereich in Umlaufrichtung magnetisiert ist, wobei das Schaltrad (12) in diesem Bereich der Ringzone im Umlaufsinn aufeinanderfolgend korrespondierende Magnetpole (N und S oder S und N) aufweist, wobei das Schaltrad (12) im wesentlichen unmittelbar vor dem Einbau in die Antriebsvorrichtung (2) nach einem vorgegebenen Muster magnetisiert wird, wobei zur Magnetisierung des scheibenförmigen Schaltrads (12) eine Magnetisierungsspule über dessen Grundriss angeordnet wird, und die Magnetisierungsspule radiale und konzentrische, bogenförmige Drahtabschnitte aufweist.

2. Verfahren zum Herstellen einer Antriebsvorrichtung (2) für ein zwischen Endstellungen bewegbares Teil eines Fahrzeugs mit einem Elektromotor, mit einer ein Drehmoment aus der Antriebsvorrichtung (2) herausführenden Welle (8), mit einer der Steuerung sowie Stillsetzen des Elektromotors für mindestens eine vorbestimmte Stellung des bewegbaren Teils dienenden Schalteinrichtung, die ein Schaltrad (12) mit mindestens einem Dauermagnet und mindestens einen magnetfeldempfindlichen Sensor (13, 14,15) aufweist, wobei das Schaltrad (12) wenigstens mittelbar mit der Welle (8) verkoppelt ist, so daß es beim Bewegen des Teils des Fahrzeugs zwischen zwei Endstellungen höchstens um 360° drehbar ist, wobei das Schaltrad (12) scheibenförmig ausgebildet ist und wenigstens teilweise aus magnetisierbarem Werkstoff besteht, wobei wenigstens ein magnetflußempfindlicher Sensor (13, 14, 15) mit einer Fläche des Schaltrads (12) wechselwirkt, die senkrecht zu einer Drehachse des Schaltrads (12) ausgerichtet ist, wobei wenigstens eine Ringzone der Fläche in wenigstens einem Bereich in Umlaufrichtung magnetisiert ist, wobei das Schaltrad (12) in diesem Bereich der Ringzone im Umlaufsinn aufeinanderfolgend korrespondierende Magnetpole (N und S oder S und N) aufweist, wobei das Schaltrad (12) in unmagnetisiertem Zustand in die Antriebsvorrichtung (2) eingebaut und darin befestigt wird und daß danach mittels einer Magnetisierungsvorrichtung (30, 50) das Schaltrad (12) nach einem vorgegebenen Muster magnetisiert wird, wobei zur Magnetisierung des scheibenförmigen Schaltrads (12) eine Magnetisierungsspule über dessen Grundriss angeordnet wird, und die Magnetisierungsspule radiale und konzentrische, bogenförmige Drahtabschnitte aufweist.

3. Verfahren nach einem der Ansprüche 1 oder 2, **dadurch gekennzeichnet, daß** das vorgegebene Muster in vorgegebener Weise mit in Drehrichtung verlaufender Magnetisierungsrichtung auf das Schaltrad (12) magnetisiert wird.

4. Verfahren nach Anspruch 1 bis 3, **dadurch gekennzeichnet, daß** radial versetzt das Schaltrad (12) wenigstens eine weitere magnetisierte Ringzone und dieser zugeordnet wenigstens einen weiteren magnetflußempfindlichen Sensor (13, 14, 15) aufweist.

5. Verfahren nach Anspruch 1 bis 4, **dadurch gekennzeichnet, daß** das Schaltrad (12) von einer zentralen Öffnung (23) ausgehend mehrere unterschiedliche Nuten (24, 25, 26) aufweist, die Bestandteil einer Codierung sind, die einem lagerichtigen Einbau des Schaltrads (12) in die Antriebsvorrichtung (2) dient.

## Claims

1. Method for producing a drive device (2) for a part, movable between end positions, of a vehicle, having an electric motor with a shaft (8) extracting a torque from the drive device (2), and having a switching device, which serves to control and shut down the electric motor for at least one predetermined position of the movable part and has an indexing wheel (12) with at least one permanent magnet and at least one sensor (13, 14, 15) sensitive to magnetic fields, the indexing wheel (12) being coupled at least indirectly to the shaft (8) such that it can be rotated by at most 360° during movement of the part of the vehicle between two end positions, the indexing wheel (12) being of disc-shaped construction and consisting at least partially of magnetizable material, at least one sensor (13, 14, 15) sensitive to magnetic flux interacting with a surface of the indexing wheel (12) which is aligned perpendicular to an axis of rotation of the indexing wheel (12), at least one annular zone of the surface being magnetized in at least one region in the circumferential direction, and the indexing wheel (12) having magnetic poles (N and S or S and N) consecutively corresponding in the circumferential sense in this region of the annular zone, the indexing wheel (12) being substantially magnetized according to a prescribed pattern directly before installation in the drive device (2), in order to magnetize the disc-shaped indexing wheel (12) a magnetization coil being arranged over the outline thereof, and the magnetization coil having radial and concentric, arcuate wire sections.

2. Method for producing a drive device (2) for a part, movable between end positions, of a vehicle, having an electric motor with a shaft (8) extracting a torque from the drive device (2), and having a switching device, which serves to control and shut down the electric motor for at least one predetermined position of the movable part and has an indexing wheel (12) with at least one permanent magnet and at least one sensor (13, 14, 15) sensitive to magnetic fields, the indexing wheel (12) being coupled at least indirectly to the shaft (8) such that it can be rotated by at most 360° during movement of the part of the vehicle between two end positions, the indexing wheel (12) being of disc-shaped construction and consisting at least partially of magnetizable material, at least one sensor (13, 14, 15) sensitive to magnetic flux interacting with a surface of the indexing wheel (12) which is aligned perpendicular to an axis of rotation of the indexing wheel (12), at least one annular zone of the surface being magnetized in at least one region in the circumferential direction, and the indexing wheel (12) having magnetic poles (N and S or S and N) consecutively corresponding in the circumferential sense in this region of the annular zone, the indexing wheel (12) is installed in an unmagnetized state in the drive device (2) and fastened therein, and in that thereafter the indexing wheel (12) being magnetized according to a prescribed pattern by means of a magnetizing device (30, 50), in order to magnetize the disc-shaped indexing wheel (12) a magnetization coil being arranged over the outline thereof, and the magnetization coil having radial and concentric, arcuate wire sections.

3. Method according to one of Claims 1 or 2, **characterized in that** the prescribed pattern is magnetized onto the indexing wheel (12) in a prescribed way with the aid of a magnetizing device running in the direction of rotation.

4. Method according to Claims 1 to 3, **characterized in that** the indexing wheel (12) has in a radially offset fashion at least one further magnetized annular zone and, assigned thereto, at least one further sensor (13, 14, 15) sensitive to magnetic flux.

5. Method according to Claims 1 to 4, **characterized in that** emanating from a central opening (23) the indexing wheel (12) has a plurality of different grooves (24, 25, 26) which are a constituent of a coding which serves to install the indexing wheel (12) in the drive device (2) in the correct position.

## Revendications

1. Procédé pour fabriquer un dispositif d'entraînement (2) pour une pièce d'un véhicule mobile entre des positions finales avec un moteur électrique, avec un arbre (8) produisant un moment de rotation à partir du dispositif d'entraînement (2), avec une installation de commutation qui sert à commander ainsi qu'à arrêter le moteur électrique pour au moins une position prédéterminée de la pièce mobile et qui présente une roue de commutation (12) avec au moins un aimant permanent et au moins un capteur (13, 14, 15) sensible au champ magnétique, la roue de commutation (12) étant au moins couplée indirectement à l'arbre (8) de sorte qu'elle puisse tourner de 360° au maximum lorsque la partie du véhicule se déplace entre deux positions finales, dans lequel la roue de commutation (12) a la forme d'un disque et est composée au moins partiellement en un matériau aimantable, au moins un capteur (13, 14, 15) sensible au champ magnétique est en interaction avec une surface de la roue de commutation (12) qui est dirigée perpendiculairement à un axe de rotation de la roue de commutation (12), au moins une zone annulaire de la surface étant aimantée dans au moins une section en direction de rotation, et la roue de commutation (12) dans cette section de la zone annulaire présente dans le sens de rotation des pôles magnétiques (N et S ou S et N) correspondants successifs,
selon lequel
la roue de commutation (12) est essentiellement aimantée selon un modèle prédéfini juste avant le montage dans le dispositif d'entraînement (2), et avec pour la magnétisation des roues de commutation (12) en forme de disque une bobine de magnétisation montée sur leur plan de base et comportant des segments de fils recourbés, radiaux et concentriques.

2. Procédé pour fabriquer un dispositif d'entraînement (2) pour une pièce d'un véhicule mobile entre des positions finales avec un moteur électrique, avec un arbre (8) produisant un moment de rotation à partir du dispositif d'entraînement (2), avec une installation de commutation qui sert à commander ainsi qu'à arrêter le moteur électrique pour au moins une position prédéterminée de la pièce mobile et qui présente une roue de commutation (12) avec au moins un aimant permanent et au moins un capteur (13, 14, 15) sensible au champ magnétique, la roue de commutation (12) étant au moins couplée indirectement à l'arbre (8) de sorte qu'elle puisse tourner de 360° au maximum lorsque la partie du véhicule se déplace entre deux positions finales, dans lequel la roue de commutation (12) a la forme d'un disque et est composée au moins partiellement en un matériau aimantable, au moins un capteur (13, 14, 15) sensible au champ magnétique est en interaction avec une surface de la roue de commutation (12) qui est dirigée perpendiculairement à un axe de rotation de la roue de commutation (12), au moins une zone annulaire de la surface étant aimantée dans au moins une section en direction de rotation, et la roue de commutation (12) dans cette section de la zone annulaire présente dans le sens de rotation des pôles magnétiques (N et S ou S et N) correspondants successifs,
selon lequel
la roue de commutation (12) est montée en état non aimanté dans le dispositif d'entraînement (2) et y est fixée, et ensuite au moyen d'un dispositif d'aimantation (30, 50) la roue de commutation (12) est aimantée selon un modèle prédéfini, avec pour la magnétisation des roues de commutation (12) en forme de disque une bobine de magnétisation montée sur leur plan de base et comportant des segments de fils recourbés, radiaux et concentriques.

3. Procédé selon l'une des revendications 1 ou 2,
**caractérisé en ce que**
le modèle prédéfini est aimanté de manière prédéfinie sur la roue de commutation (12) avec une installation d'aimantation se déplaçant en direction de rotation.

4. Procédé selon l'une des revendications 1 à 3,
**caractérisé en ce qu'**
en décalage radial la roue de commutation (12) présente au moins une autre zone annulaire aimantée et au moins un autre capteur (13, 14, 15) sensible au champ magnétique associé à celle-ci.

5. Procédé selon l'une des revendications 1 à 4,
**caractérisé en ce que**
la roue de commutation (12) présente plusieurs rainures (24, 25, 26) différentes partant d'une ouverture (23) centrale, lesquelles sont des parties constitutives d'un codage qui sert à monter en position exacte la roue de commutation (12) dans le dispositif d'entraînement (2).
